# EUROPÄISCHE PATENTANMELDUNG

(11) **EP 1 626 267 A1**
(43) Veröffentlichungstag der Anmeldung: **15.02.2006**
(21) Anmeldenummer: 05014915.2
(22) Anmeldetag: 09.07.2005
(51) Int. Cl.: G01N 21/31, G01J 3/02, G01N 21/00

(54) **Anordnung und Verfahren zur Charakterisierung der Strahlungsquellen von Analysegeräten**

(30) Priorität: 10.08.2004 DE 102004039245
(71) Anmelder: Analytik Jena AG, 07745 Jena (DE)
(72) Erfinder: Thamm, Eike, Dr., 07751 Jena-Maua (DE); Schlemmer, Gerhard, Dr., 88696 Owingen (DE)
(74) Vertreter: Niestroy, Manfred

(57) **Zusammenfassung**

Die Erfindung bezieht sich auf eine Anordnung zur Charakterisierung der Strahlungsquellen (5.1,5.2,5.3) in einem Analysegerät (1). Den Strahlungsquellen (5.1,5.2,5.3) sind Datenspeicher zugeordnet, die mit einer Schreib-/Leseeinheit (11) kommunizierend in Verbindung stehen, wobei zwischen dem Datenspeicher und der Schreib-/Leseeinheit (11) Daten ausgetauscht werden, die sowohl die Identifikation der jeweiligen Strahlungsquelle (5.1,5.2,5.3) als auch Vorgaben für deren Ansteuerung betreffen.

Die Erfindung bezieht sich weiterhin auf ein entsprechendes Verfahren zur Charakterisierung von Strahlungsquellen (5.1,5.2,5.3) innerhalb eines Analysegerätes (1) anhand von jeder Strahlungsquelle (5.1,5.2,5.3) zugeordneten Datenspeichern, wobei die gespeicherten Daten in Abhängigkeit vor der Benutzung und dem Einsatz der jeweiligen Strahlungsquelle (5.1,5.2,5.3) in zeitlichen Abständen aktualisiert werden.

## Beschreibung

Die Erfindung bezieht sich auf eine Anordnung und ein Verfahren zur Charakterisierung von Strahlungsquellen in einem Analysegerät, vornehmlich eines Atomabsorptions-Spektrometers.

Bei einer Anordnung nach GB 2,109,922 A sind am Sockel einer Hohlkathodenlampe Kontaktstifte vorgesehen, die mit einem im Sockel eingegossenen Widerstand verbunden sind. Über die Höhe des Widerstandes erfolgt im Spektrometer eine Identifizierung der Hohlkathodenlampe. Dieses Verfahren hat mehrere Nachteile. Abgesehen davon, daß zusätzliche Kontaktstifte im Sockel jeder Lampe erforderlich sind, ist die Kodierung mit den Kontaktstiften festgelegt und unveränderlich. Durch die begrenzt mögliche Anzahl von Kontaktstiften im Sockel sowie durch die Verwendung eines begrenzten Spektrums an Widerstandswerten ist auch die Menge an kodierbarer Information begrenzt. Zudem sind an allen Sockelsteckdosen zusätzlich elektrisch beschaltete Kontaktbuchsen vorzuhalten. Durch das Eingießen der Widerstände erfolgt eine Modifikation der standardisierten Sockel und damit eine oft unerwünschte Bindung an Lampenhersteller.

Eine weitere Lösung für Spektrometer mit einer Hohlkathodenlampe ist in DE 34 19 739 A1 beschrieben, wobei die Lampe optisch über einen Strichkode markiert ist. Damit wird zwar eine berührungslose Identifikation ermöglicht, jedoch bestehen weiterhin Nachteile. Auch diese Kodierung ist permanent, das heißt, daß einmal hinterlegte Informationen nicht wieder geändert werden können. Zudem ist die Kodierung weiterhin monodirektional, was bedeutet, daß prinzipiell keine Speicherung neuer oder zusätzlicher Daten an oder auf der Hohlkathodenlampe möglich ist. Weiterhin kann der Strichkode durch Schmutz oder Kratzer permanent unbrauchbar werden.

Eine Alternative zu den vorgenannten Lösungen ist in DE 34 19 800 A1 dargelegt. Bei dieser Lösung werden die relevanten Informationen auf magnetischen Datenträgern gespeichert, die an oder auf der Hohlkathodenlampe angeordnet sind. Sinngemäß bleiben dieselben Nachteile wie bereits oben beschrieben bestehen. Hinzu kommt, daß auf Grund der in Atomabsorptions-Spektrometern verwendeten Nachweistechnologien häufig sehr starke Magnetfelder erzeugt werden. Deshalb kann es zu ungewollten Wechselwirkungen mit den für die Kodierung verwendeten schwachen Magnetfeldern kommen, was unter Umständen zum Verlust aller hinterlegten Informationen führt.

In DE 34 20 659 A1 ist zudem eine geometrische Kodierung beschrieben. Dabei werden an der Lampe bzw. Strahlungsquelle oder deren Sockel Vorsprünge oder Ausnehmungen angebracht, die im Spektrometer mechanisch abgetastet und interpretiert werden. Zu den Nachteilen zählen hierbei die Beschränkung der kodierbaren Informationsmenge sowie der erforderliche konstruktive Eingriff in die Lampenhalterungen.

Die DE 35 38 780 A1 beschreibt ein Verfahren zur elektrischen Kodierung von Hohlkathodenlampen. Dabei erfolgt die Identifizierung der Lampe im Spektrometer durch eine eindeutige Folge von elektrischen Impulsen. Im Gegensatz zur passiven elektrischen Widerstandskodierung ist die Menge an hinterlegbaren Informationen bei diesem Verfahren höher. Allerdings handelt es sich ebenfalls um ein passives System mit den oben beschriebenen Nachteilen. Darüber hinaus sind wiederum zusätzliche Kontakte an jeder Lampe und jeder Lampensteckdose im Spektrometer erforderlich. Das System arbeitet außerdem nur monodirektional, d.h. die Informationen fließen nur von der Lampe zu einem Auslesegerät.

Spektrometer, insbesondere Atomabsorptions-Spektrometer, in denen die zu kodierenden bzw. zu identifizierenden Strahlungsquellen verwendet werden, dienen beispielsweise zur Bestimmung von chemischen Elementen. Üblicherweise existiert für jedes zu bestimmende chemische Element eine zugehörige Strahlungsquelle, bevorzugt eine Hohlkathodenlampe, die eben dieses Element in der Kathode enthält. Durch Zufuhr elektrischer Energie wird das Kathodenmaterial zur Emission einer elementspezifischen Strahlung angeregt. Beim Durchgang durch die Probe werden dieser Strahlung Änderungen aufgeprägt, die durch Prozesse wie z.B. Absorption und Streuung verursacht sind. Die von der Probe beeinflußte Strahlung wird detektiert und aus dem Vergleich mit detektierter Strahlung bei fehlender Probe wird der Gehalt des betreffenden chemischen Elements in der Probe bestimmt.

Die für den Betrieb einer Hohlkathodenlampe optimalen Parameter sind also elementabhängig. Sie werden bislang in eine Steuereinheit des Spektrometers manuell eingegeben.

Mit ein und demselben Spektrometer soll jedoch nicht nur eines von den in einer Probe vorkommenden Elementen bestimmt werden, so daß die Benutzung mehrerer verschiedener Hohlkathodenlampen erforderlich ist.

Um in akzeptabler Zeit verschiedene chemische Elemente in einer Probe zu analysieren, werden mehrere Hohlkathodenlampen in einem Mehrfach-Lampenhalter mit Wechseleinrichtung plaziert. Die Wechseleinrichtung wird so gehandhabt, daß sich im Strahlengang immer die für die Analyse eines bestimmten Elementes geeignete Hohlkathodenlampe befindet. Welche Position diese Hohlkathodenlampe im Lampenwechsler einnimmt, muß bisher auf jeden Meßvorgang bezogen manuell vorgegeben werden.

Die Hohlkathodenlampen erfahren aufgrund physikalischer und chemischer Prozesse während des Betriebes permanente, als Alterung bezeichnete Veränderungen ihrer Eigenschaften, wobei die Geschwindigkeit dieser Veränderungen von den Betriebsparametern der Hohlkathodenlampen bzw. des Spektrometers abhängig ist.

Es ist weiterhin gängige Praxis, Hohlkathodenlampen in verschiedenen Spektrometern zu betreiben, so daß sich auch diesbezüglich die Betriebsbedingungen für die Hohlkathodenlampen häufig ändern.

Weder über den bislang erfolgten Einsatz noch über den Alterungszustand und damit über die Restlebensdauer einer Hohlkathodenlampe stehen gegenwärtig dem Nutzer zuverlässige Informationen zur Verfügung.

Hinzu kommt, daß die Hohlkathodenlampen prinzipiell geräteunabhängig gefertigt werden. Das heißt, daß Hohlkathodenlampen in der Regel in möglichst jedem Spektrometer-Typ einsetzbar sind, vorausgesetzt die Sockelgestaltung ist dieselbe.

Für die erforderlichen Betriebsparameter entsteht so eine Matrix aus chemischem Element mit zugeordneten Hohlkathodenlampen einerseits und einem vom Spektrometer-Typ abhängigen elektrischen Regime andererseits. Die Hersteller von Hohlkathodenlampen listen in mehr oder weniger umfangreichen Datenblättern die entsprechenden Kombinationsmöglichkeiten auf. Nachteiligerweise sind die Datenblätter meist unvollständig oder aufgrund technologischer Weiterentwicklung der Spektrometer überholt.

Daher besteht die Aufgabe der Erfindung darin, eine Anordnung und ein Verfahren zur Charakterisierung der Strahlungsquellen, insbesondere von Hohlkathodenlampen, in einem Analysegerät zu schaffen, wodurch auf unkomplizierte Weise Daten vor, nach oder während der Benutzung einer jeden Strahlungsquelle zugeordnet speicherbar und abrufbar sind.

Diese Aufgabe wird erfindungsgemäß mit einer Anordnung gelöst, welche die Merkmalen nach dem ersten Patentanspruch aufweist; vorteilhafte Ausführungen und Weiterbildungen der Erfindung sind in den nachgeordneten Patentansprüchen aufgeführt. Ein vorteilhaftes Verfahren zur Lösung der Aufgabe ist im achten Patentanspruch aufgezeigt.

Die Erfindung ermöglicht, daß wesentliche Informationen über den Zustand der jeweiligen Strahlungsquelle aktualisiert und der Strahlungsquelle selbst zugeordnet abgespeichert werden. Diese Informationen sind jederzeit auswertbar, auch dann, wenn sich die Strahlungsquelle außerhalb des Spektrometers befindet bzw. nicht aktiv genutzt wird.

Insbesondere können während des gleichzeitigen Betriebs mehrerer Strahlungsquellen selbige erkannt und deren Informationsträger parallel durch eine aktive elektronische Einrichtung aktualisiert werden. Eine Beschränkung auf bestimmte Bauformen des Spektrometers oder der Strahlungsquelle besteht nicht mehr. Durch die nunmehr mögliche Erkennung des chemischen Elements anhand kodierter Lampen, deren aktueller Alterungszustand unmittelbar vor und auch während einer Messung oder einer Meßreihe erfaß- und abrufbar ist, werden Quellen für Meßfehler reduziert.

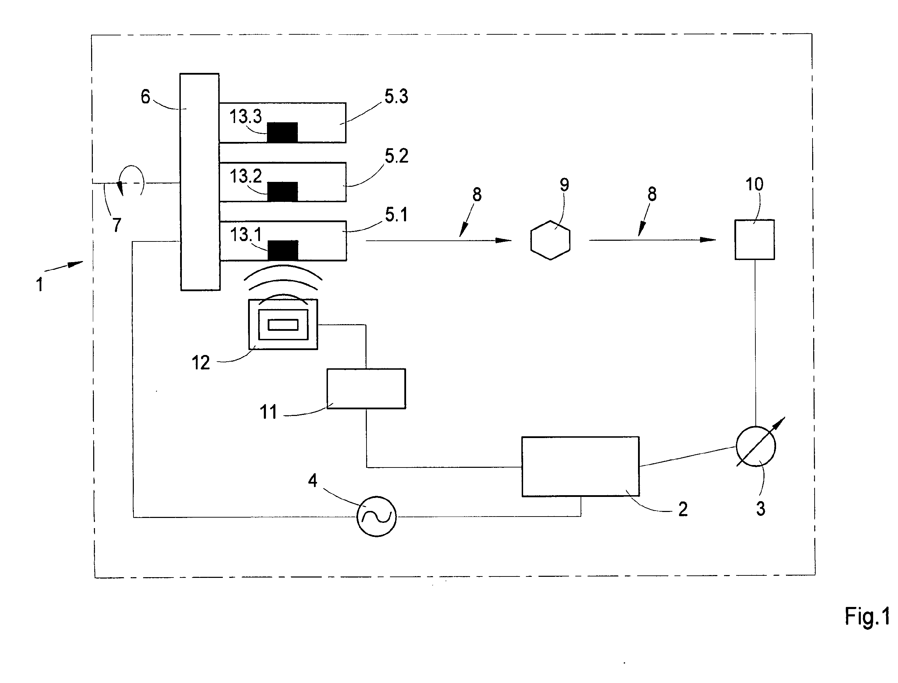

Die Erfindung wird nachfolgend anhand einer in Fig.1 schematisch gezeigten vorteilhaften Anordnung näher erläutert.

In Fig.1 ist ein Analysegerät, beispielsweise ein Atomabsorptions-Spektrometer, in seinem prinzipiellen Aufbau dargestellt. Dieses Analysegerät 1 umfaßt eine zentrale Steuereinheit 2, eine der Steuereinheit 2 zugeordnete Anzeigeeinheit 3 sowie eine Stromversorgung 4 für Strahlungsquellen 5.1, 5.2, 5.3, die im vorliegenden Fall als Hohlkathodenlampen ausgebildet und auf einem Lampenhalter 6 angeordnet sind.

Die Stromversorgung 4 wird von der Steuereinheit 2 angesteuert und versorgt den Lampenhalter 6 mit der erforderlichen Energie. Der Lampenhalter 6 ist mit Stecksockeln für jeweils eine der Strahlungsquellen 5.1, 5.2 und 5.3 ausgestattet, bevorzugt als Aufnahmerevolver ausgebildet und als solcher um eine Achse 7 drehbar gelagert.

Bei Drehung des Lampenhalters 6 um die Achse 7 ist jeweils einer der Stecksockel so plaziert, daß sich die Abstrahlungsrichtung der von diesem Stecksockel aufgenommenen Strahlungsquelle, im beispielhaft dargestellten Falle ist dies die Strahlungsquelle 5.1 , mit der Richtung des Strahlenganges 8 deckt.

In den Strahlengang 8 ist eine zu analysierende Probe 9 gestellt, der eine mit der zentralen Steuereinheit 2 und der Anzeigeeinheit 3 verknüpfte Detektoreinheit 10 nachgeordnet ist. Die zentrale Steuereinheit 2 ist zudem mit einer Schreib-/Leseeinheit 11 verbunden, die eine Sende-/Empfangsantenne 12 aufweist, deren Empfangsrichtung auf die Strahlungsquellen 5.1, 5.2, 5.3 zielt.

Erfindungsgemäß ist weiterhin jede der Strahlungsquellen 5.1, 5.2, 5.3 mit einem Datenträger in Form eines Transponders 13.1, 13.2 und 13.3 bestückt. Jeder Transponder 13.1, 13.2, 13.3 besteht im wesentlichen aus einem Mikroprozessor mit beschreib- und lesbarer Speicherfunktion und einer integrierten Sende-/Empfangsantenne (in Fig.1 nicht gesondert dargestellt).

Auf den vorzugsweise flexibel ausgeführten Transpondern 13.1, 13.2, 13.3 sind zunächst die konstanten Eigenschaften der Strahlungsquellen 5.1, 5.2, 5.3 abgespeichert.

Die Schreib-/Leseeinheit 11 stellt über diese bereits gespeicherten Informationen hinaus Daten bereit, die per Funk drahtlos mittels der Sende-/Empfangsantenne 12 zu den in die Transponder 13.1, 13.2, 13.3 integrierten Sende-/Empfangsantennen übertragen werden.

Umgekehrt empfängt die Schreib-/Leseeinheit 11 über die Antennen einen Identifizierungscode der jeweils aktiven Strahlungsquelle, im vorliegenden Fall der Strahlungsquelle 5.1, und sorgt über die Stromversorgung 4 für die Bereitstellung von elektrischer Energie entsprechend den Betriebsparametern.

Weiterhin werden Informationen über Art und Dauer der Beanspruchung der Hohlkathodenlampe 5.1 von der Schreib-/Leseeinheit 1 1 über die Sende-/Empfangsantenne 12 zu dem zugeordneten Transponder 13.1 übermittelt und dort gespeichert. Zu diesen Informationen zählen insbesondere, aber nicht ausschließlich, die Betriebsdauer der Lampe, die bisher geleistete elektrische Arbeit und der maximale Betriebsstrom.

Für unterschiedliche Analysegeräte 1 können in den Transpondern 13.1, 13.2, 13.3 Speicherbereiche für gesonderte Belastungskonten angelegt sein.

Mit der erfindungsgemäßen Anordnung und dem erfindungsgemäßen Verfahren stehen dem Anwender zu jedem Zeitpunkt, insbesondere vor Beginn einer neuen Messung oder Meßreihe, Informationen über den bisherigen Einsatz der Strahlungsquellen 5.1, 5.2, 5.3 und damit über deren Alterungszustand zur Verfügung. Die Notwendigkeit der Benutzung von Datenblättern und Etiketten an den Strahlungsquellen 5.1, 5.2, 5.3 entfällt.

Sofern eine Strahlungsquelle 5.1, 5.2, 5.3 ihre Grenznutzungsdauer erreicht hat, können anhand der elektronisch hinterlegten Historie auch Unregelmäßigkeiten der abgehenden Strahlung vorhergesagt und dadurch zu erwartende Meßfehler vorbeugend vermieden werden.

Von Vorteil ist weiterhin, daß im Gegensatz zu den eingangs genannten bisher bekannten Verfahren zur Kodierung von Strahlungsquellen nun keine speziell gefertigten Lampen mit z.B. zusätzlichen elektrischen Kontaktstiften, eingegossenen Schaltkreisen oder ähnlich erforderlich sind. Die Transponder 13.1, 13.2, 13.3 können jederzeit auf alle handelsüblichen Strahlungsquellen, insbesondere Hohlkathodenlampen, aufgeklebt werden.

Bei einer Nachrüstung von bereits im Einsatz befindlichen Analysegeräten ist ein Eingriff in bestehende Baugruppen, wie Lampenhalter oder die elektrische Beschaltung, nicht erforderlich.

Ein weiterer Vorteil der neuen Anordnung und des neuen Verfahrens besteht zudem in der Vermeidung von subjektiven Fehlern bei der Bedienungen der Analysegeräte. Soll eine Strahlungsquelle dennoch abweichend von den Empfehlungen des Herstellers betrieben werden, ist dies nur noch vorsätzlich möglich.

Jede der Strahlungsquellen führt permanent ihre Historie mit sich. Bei unklaren Garantiefällen kann anhand der ausgelesenen Daten objektiv entschieden werden, ob ein Garantiefall oder ein vorsätzlicher Bedienungsfehler vorliegt.

Selbstverständlich können in den Analysegeräten nach wie vor auch nicht entsprechend der Erfindung mit Datenspeichern versehene bzw. nicht kodierte Lampen genutzt werden. Andererseits lassen sich wie beschrieben kodierte Strahlungsquellen auch weiterhin in Spektrometern ohne Schreib- und Leseeinheit 11 verwenden. Sie können dann wie üblich angesteuert und betrieben werden.

## Patentansprüche

1. Anordnung zur Charakterisierung der in einem optischen Analysegerät (1) verwendeten Strahlungsquellen (5.1,5.2,5.3), wobei
- jeder Strahlungsquelle (5.1,5.2,5.3) ein Datenträger zugeordnet ist, auf dem Daten zur Identifikation der betreffenden Strahlungsquelle (5.1,5.2,5.3) und/oder Daten zu den auf die Strahlungsquelle (5.1,5.2,5.3) bezogenen Betriebsparametern gespeichert sind,
- der einer ausgewählten Strahlungsquelle (5.1) zugeordnete Datenträger zwecks Datenübertragung kommunizierend mit einer Schreib-/Leseeinheit (11) verbunden ist und
- die Schreib-/Leseeinheit (11) mit einer Steuereinheit (2) zur Vorgabe der Betriebsparametern für die Ansteuerung der ausgewählten Strahlungsquelle (5.1) verknüpft ist.

2. Anordnung nach Anspruch 1, **dadurch gekennzeichnet, daß** als Datenspeicher Transponder (13.1,13.2,13.3) vorgesehen sind, die
- zum Einlesen und Abrufen von Identifikationsdaten und
- zum Einlesen und Abrufen von Daten zu Betriebsparametern ausgebildet sind, wie Betriebsspannung, Betriebsstrom, Wellenlänge des abgestrahlten Lichts, Benutzungsdauer je Analysevorgang, Benutzungsdauer kumulativ über mehrere Analysevorgänge, Benutzung in verschiedenen Analysegeräten (1), restliche zu erwartende Lebensdauer.

3. Anordnung nach Anspruch 2 oder 3, **dadurch gekennzeichnet, daß** die Schreib-/Leseeinheit (11) über eine Sende-/Empfangsantenne (12) zur drahtlosen Datenübertragung von bzw. zu dem der ausgewählten Strahlungsquelle (5.1) zugeordneten Datenträger verfügt.

4. Anordnung nach einem der vorgenannten Ansprüche, **dadurch gekennzeichnet, daß** jeder der Transponder (13.1,1 3.2,13.3) einen Mikroprozessor mit beschreib- und lesbarer Speicherfunktion sowie eine Sende-/Empfangsantenne zum Senden der aus dem Speicher auszulesenden und zum Empfangen der in den Speicher einzuschreibenden Daten umfaßt.

5. Anordnung nach Anspruch 4, **dadurch gekennzeichnet, daß** als Strahlungsquellen (5.1,5.2,5.3) Hohlkathodenlampen oder andere Linienstrahler vorgesehen sind.

6. Anordnung nach einem der vorgenannten Ansprüche, **dadurch gekennzeichnet, daß** das optische Analysegerät (1) ein Spektrometer ist.

7. Anordnung nach Anspruch 6, **dadurch gekennzeichnet, daß** das Spektrometer als Atomabsorptions-Spektrometer ausgebildet ist.

8. Verfahren zur Charakterisierung der in einem optischen Analysegerät (1) verwendeten Strahlungsquellen (5.1,5.2,5.3), wobei Daten, die einer zur Benutzung bei einem Analysevorgang ausgewählten Strahlungsquelle (5.1) zugeordnet sind, an eine zentrale Steuereinheit (2) übermittelt und von der Steuereinheit (2) diesen Daten entsprechende Betriebsparameter generiert werden, **dadurch gekennzeichnet,**
- **daß** die Datenübertragung bidirektional erfolgt, indem
- einerseits die ausgewählte Strahlungsquelle (5.1) betreffende Identifikationsdaten und/oder Informationsdaten, wie vorzugebende Betriebsspannung, vorzugebender Betriebsstrom, restliche zu erwartende Lebensdauer oder Wellenlänge des abgestrahlten Lichts, zu der Steuereinheit (2) übertragen werden und
- andererseits die ausgewählte Strahlungsquelle (5.1) betreffende Daten, wie Benutzungsdauer je Analysevorgang oder Benutzungsdauer kumulativ über mehrere Analysevorgänge, zu der ausgewählten Strahlungsquelle (5.1) übertragen und dieser Strahlungsquelle (5.1) zugeordnet gespeichert werden.
